# EUROPÄISCHE PATENTSCHRIFT

(11) **EP 2 576 033 B1**
(45) Veröffentlichungstag und Bekanntmachung des Hinweises auf die Patenterteilung: **14.05.2014**
(21) Anmeldenummer: 11725897.0
(22) Anmeldetag: 06.06.2011
(51) Int. Cl.: B01F 3/04, C02F 3/20

(54) **VORRICHTUNG ZUM BEGASEN VON FLÜSSIGKEITEN**
DEVICE FOR GASSING LIQUIDS
DISPOSITIF DE TRAITEMENT PAR EXPOSITION AU GAZ DE LIQUIDES

(30) Priorität: 07.06.2010 DE 102010029754
(43) Veröffentlichungstag der Anmeldung: 10.04.2013
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2011/059290
(87) Internationale Veröffentlichungsnummer: WO 2011/154354

(56) Entgegenhaltungen:
- EP-A1- 0 549 518
- EP-A2- 0 940 371
- EP-A2- 2 110 170
- DE-U1- 9 415 775
- US-A1- 2003 192 817

## Beschreibung

Die Erfindung betrifft eine Vorrichtung zum Begasen von Flüssigkeiten, insbesondere zum Belüften von Abwasser und dgl.

Die EP 0 549 518 A1 beschreibt eine Einrichtung zum feinblasigen Begasen einer Flüssigkeit. Dabei weist eine Stützplatte zumindest eine Gasaustrittsöffnung auf. Eine Begasungsmembran mit einer feinen Perforation ist im Randbereich dicht mit der Stützplatte verbunden. Ferner ist eine Öffnung der Gasaustrittsöffnung mit einem Einweg-Membranventil versehen, welches ein Eindringen von Flüssigkeit in die Gasaustrittsöffnung verhindert. Zum Begasen einer Flüssigkeit wird durch die Gasaustrittsöffnung beispielsweise Luft zwischen die Stützplatte und die Begasungsmembran gedrückt. Infolgedessen hebt die Begasungsmembran von der Stützplatte ab und bildet nach außen hin eine konvexe Fläche. Die Luft tritt durch die Perforation hindurch und bildet in der zu begasenden Flüssigkeit feine Luftblasen. - Sofern ein hoher Wasserdruck von beispielsweise 4 bis 8 Meter Wassersäule auf die bekannte Einrichtung wirkt, wird die Begasungsmembran nur mehr im Bereich der darunterliegenden Gasaustrittsöffnung von der Stützplatte abgehoben. Es findet lediglich in diesem begrenzten Bereich ein Gasaustritt statt. Die Effektivität der bekannten Einrichtung ist insbesondere bei einem hohen Wasserdruck stark eingeschränkt.

Aus der DE 94 15 775 U1 ist eine weitere Begasungsvorrichtung bekannt. Dabei sind in einer tellerartigen Stützstruktur zwei radiale Schlitze als Gasaustrittsöffnungen vorgesehen. Eine Begasungsmembran weist im Bereich über den Gasaustrittsöffnungen keine Perforation auf. - Damit wird zwar die Effektivität der Begasungsvorrichtung bei einem hohen Wasserdruck verbessert. Gleichwohl kommt es auch hier dazu, dass durch den Wasserdruck die entfernt von den Gasaustrittsöffnungen befindlichen Bereiche der Begasungsmembran gegen die Stützstruktur gedrückt werden. In diesen Bereichen tritt nachteiligerweise kein Gas durch die Perforation der Begasungsmembran in die zu begasende Flüssigkeit aus.

Die EP 0 940 371 A2 offenbart eine Begasungsvorrichtung mit einer kugelsegmentartigen Stützstruktur und einer die Stützstruktur überspannenden kugelsegmentartigen Begasungsmembran. Die Stützstruktur weist an ihrer höchsten Stelle eine mit einer Gaszuführleitung verbundene Öffnung auf. Die Begasungsmembran weist konzentrisch und versetzt angeordnete feine Begasungslöcher mit einer von außen nach innen abnehmenden Dichte auf.

Die EP 2 110 170 A2 offenbart eine weitere Begasungsvorrichtung, welche eine Stützstruktur und eine die Stützstruktur überspannende Begasungsmembran mit Löchern aufweist. Die Stützstruktur weist in ihrer Mitte eine Gasdurchlassöffnung auf.

Aufgabe der Erfindung ist es, die Nachteile nach dem Stand der Technik zu beseitigen. Es soll insbesondere eine Vorrichtung angegeben werden, welche eine effektive Begasung einer Flüssigkeit auch bei einem hohen Flüssigkeitsdruck ermöglicht. Nach einem weiteren Ziel der Erfindung soll die Vorrichtung möglichst robust und zuverlässig sein.

Diese Aufgabe wird durch die Merkmale des Anspruchs 1 gelöst. Zweckmäßige Ausgestaltungen der Erfindung ergeben sich aus den Merkmalen der Ansprüche 2 bis 13.

Nach Maßgabe der Erfindung wird eine Vorrichtung zum Begasen von Flüssigkeiten, insbesondere zum Belüften von Abwasser und dgl., vorgeschlagen,
mit einem eine im Wesentlichen runde Öffnungsfläche aufweisenden unteren Gehäuseelement mit einem Gaseinlassstutzen,
einem zur Öffnungsfläche korrespondierenden scheibenförmigen oberen Gehäuseelement zum Abdecken der Öffnungsfläche, wobei das obere Gehäuseelement eine scheibenförmige Trägerplatte mit einer dem unteren Gehäuseelement abgewandten im Wesentlichen eben ausgebildeten Oberseite aufweist und wobei in der Nähe eines Umfangsrands des oberen Gehäuseelements mehrere die Trägerplatte durchgreifende Gasdurchlassöffnungen vorgesehen sind, und
einer die Oberseite des oberen Gehäuseelements überdeckenden perforierten Begasungsmembran, so dass Gas durch die in der Trägerplatte radial außenliegenden Gasdurchlassöffnungen gegen die Begasungsmembran gedrückt wird, wodurch sich die Begasungsmembran vom Umfangsrand her vollflächig aufbläht.

Das obere Gehäuseelement ist im Wesentlichen aus einer scheibenförmigen Trägerplatte gebildet, deren Oberseite durch die perforierte Begasungsmembran abgedeckt ist. Die perforierte Begasungsmembran umgreift zweckmäßigerweise einen Umfangsrand der Trägerplatte. Indem die Gasdurchlassöffnungen in der Nähe des Umgangsrands vorgesehen sind, wird auch bei einem hohen Wasserdruck sichergestellt, dass die Begasungsmembran vollständig von der Oberseite der Trägerplatte abhebt und Gas durch die Perforationen der Begasungsmembran hindurchtritt. Die vorgeschlagene Vorrichtung hat weiterhin den Vorteil, dass es bereits bei Anliegen eines relativ geringen Luftdrucks zum Austritt von Luftblasen durch die Begasungsmembran kommt. Die Vorrichtung lässt sich im Hinblick auf die zur Begasung zu verwendende Luftmenge in einem weiten Bereich regeln. Sie kann in einem unteren Regelbereich bereits mit einer geringen Luftmenge betrieben werden.

Unter dem Begriff "in der Nähe des Umgangsrands des oberen Gehäuseelements" wird eine Ringfläche auf der Oberseite verstanden, welche vom Umfangsrand her bis etwa zum 0,5-Fachen, vorzugsweise dem 0,7-Fachen, eines Radius des oberen Gehäuseelements reicht. Die Gasdurchlassöffnungen können vorteilhafterweise in Form von Schlitzen ausgebildet sein, welche im selben radialen Abstand von einem Mittelpunkt des oberen Gehäuseelements anbeordnet sind und sich abschnittsweise entlang eines gedachten Kreises erstrecken, der innerhalb der Ringfläche liegt.

Nach einer vorteilhaften Ausgestaltung der Erfindung weist das untere Gehäuseelement einen zumindest abschnittsweise trichterartig ausgestalteten Boden auf, an dem ein nach Art einer Hohlkehle ausgebildetes Anschlussstück zum formschlüssigen Ansetzen des unteren Gehäuseelements an eine Gaszuführleitung angeformt ist. Das Anschlussstück ist zweckmäßigerweise nach Art einer halbzylinderartigen Rinne ausgeführt, an deren beiden Kanten nach außen vorspringende Stege angeformt sein können. Es kann ferner ein zum Anschlussstück korrespondierendes Gegenstück vorgesehen sein, welches im Wesentlichen die Form einer Rinne aufweist, an deren Kanten einander gegenüberliegende nutartige Ausnehmungen angeformt sind. Das ermöglicht ein im Wesentlichen formschlüssiges Aufsetzen des Anschlussstücks auf eine Gaszuführleitung und eine Verriegelung desselben mit dem Gegenstück. Zur Herstellung einer kraftschlüssigen Verbindung können beispielsweise die Stege und die dazu korrespondierenden nutartigen Ausnehmungen schräg gestellt sein, so dass mit zunehmender Einschubtiefe der Stege in die nutartigen Ausnehmungen eine zunehmende elastische Kraft wirkt, welche das Anschlussstück und das Gegenstück gegen die Gaszuführleitung zwingt.

Der Boden kann einen gewölbten Abschnitt mit einer zur Hohlkehle korrespondierenden und in Richtung der Öffnungsfläche vorspringenden Wölbung aufweisen. Zweckmäßigerweise durchgreift der Gaseinlassstutzen den Boden zentral. Ferner durchgreift der Gaseinlassstutzen zweckmäßigerweise das Anschlussstück. Damit kann der Gaseinlassstutzen unmittelbar durch Aufsetzen des unteren Gehäuseelements mit einer Gaszuführöffnung in der Gaszuführleitung verbunden werden. Das erleichtert die Montage der erfindungsgemäßen Vorrichtung an der Gaszuführleitung.

Nach einer weiteren Ausgestaltung der Erfindung ist eine dem Gehäuseinneren des unteren Gehäuseelements zugewandte Öffnung des Gaseinlassstutzens mit einem Einwegventil, vorzugsweise einem Einweg-Membranventil, versehen. Insbesondere ein Einweg-Membranventil kann einfach und kostengünstig hergestellt werden. Das Vorsehen eines Einwegventils verhindert beispielsweise bei einer Beschädigung der Begasungsmembran einen Eintritt von Flüssigkeit in den Gaseinlassstutzen.

Nach einer weiteren Ausgestaltung ist vorgesehen, dass sich von einer der Oberseite gegenüberliegenden Unterseite des oberen Gehäuseelements eine zylindrische Stützstruktur erstreckt. Die, vorteilhafterweise zentral an der Unterseite angebrachte, zylindrische Stützstruktur weist vorteilhafterweise mehrere Durchbrüche auf, welche einen Gasdurchtritt in das Gehäuseinnere ermöglichen. Die Durchbrüche sind zweckmäßigerweise in Form axial verlaufender Schlitze ausgestaltet.

Von der zylindrischen Stützstruktur können sich radial in Richtung des Umfangsrands Stege bzw. Rippen erstrecken. Solche Rippen, welche zweckmäßigerweise an der Unterseite der Stützplatte angeformt sind, erhöhen die Stabilität der Vorrichtung. Es wird insbesondere eine unerwünschte Deformation der Trägerplatte bei der Einwirkung eines hohen Wasserdrucks vermieden.

Zwischen zwei benachbarten Rippen kann jeweils eine Gasauslassöffnung vorgesehen sein. Zweckmäßigerweise ist die Gasauslassöffnung schlitzförmig ausgestaltet und erstreckt sich in der Trägerplatte benachbart zum Umfangsrand von einer Rippe bis zur benachbarten nächsten Rippe.

Nach einer weiteren besonders vorteilhaften Ausgestaltung der Erfindung sind die Rippen so ausgestaltet, dass sie sich bei auf dem unteren Gehäuseelement angebrachten oberen Gehäuseelement abschnittsweise formschlüssig auf dem gewölbten Abschnitt abstützen. Damit kann weiter die Stabilität der Trägerplatte gegen die Einwirkung eines hohen Wasserdrucks verbessert werden.

Nach einer weiteren besonders vorteilhaften Ausgestaltung der Erfindung sind die Rippen so ausgestaltet, dass sie bei auf dem unteren Gehäuseelement angebrachten oberen Gehäuseelement in zwei zueinander senkrechten Richtungen auf dem gewölbten Abschnitt formschlüssig abstützbar sind. D. h. eine Unterkante der Rippen ist so ausgestaltet, dass das obere Gehäuseelement in zwei Montagepositionen formschlüssig auf das untere Gehäuseelement, insbesondere den gewölbten Abschnitt des Bodens, aufgesetzt werden kann. Das erleichtert weiter die Montage der Vorrichtung.

Nach einer weiteren Ausgestaltung ist ein das obere Gehäuseelement randlich übergreifender Gewindering zum Befestigen des oberen Gehäuseelements am unteren Gehäuseelement vorgesehen. Mit dem vorgeschlagenen Gewindering wird das obere Gehäuseelement gegen das untere Gehäuseelement gezwungen. Die vorgeschlagene Verbindung der Gehäuseelemente mittels des Gewinderings ist lösbar. Infolgedessen kann beispielsweise eine schadhafte Begasungsmembran ausgetauscht werden.

Nachfolgend wird ein Ausführungsbeispiel der Erfindung anhand der Zeichnungen näher erläutert. Es zeigen:
- Fig. 1: eine teilweise aufgebrochene Explosionsansicht einer Vorrichtung,
- Fig. 2: eine perspektivische Schnittansicht durch die Vorrichtung gemäß Fig. 1 im Montagezustand,
- Fig. 3: eine weitere perspektivische Schnittansicht gemäß Fig. 2,
- Fig. 4: eine perspektivische Unteransicht des oberen Gehäuseelements und
- Fig. 5: eine Seitenansicht gemäß Fig. 4.

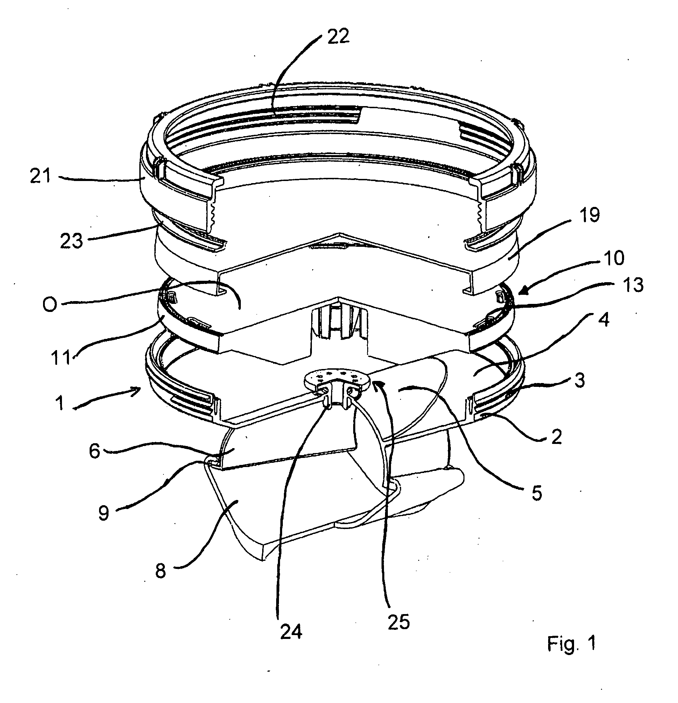

In den Fig. 1 bis 3 weist ein, vorteilhafterweise aus spritzgegossenem Kunststoff hergestelltes, unteres Gehäuseelement 1 eine zylindrische erste Umfangswand 2 mit einem daran angeformten Außengewinde 3 auf. Von der ersten Umfangswand 2 erstreckt sich ein trichterförmiger Bodenabschnitt 4, welcher von einem gewölbten Bodenabschnitt 5 durchgriffen wird. Der gewölbte Bodenabschnitt 5 ist Bestandteil eines am Boden angeformten Anschlussstücks 6, welches nach Art eines Halbzylinders ausgebildet ist.

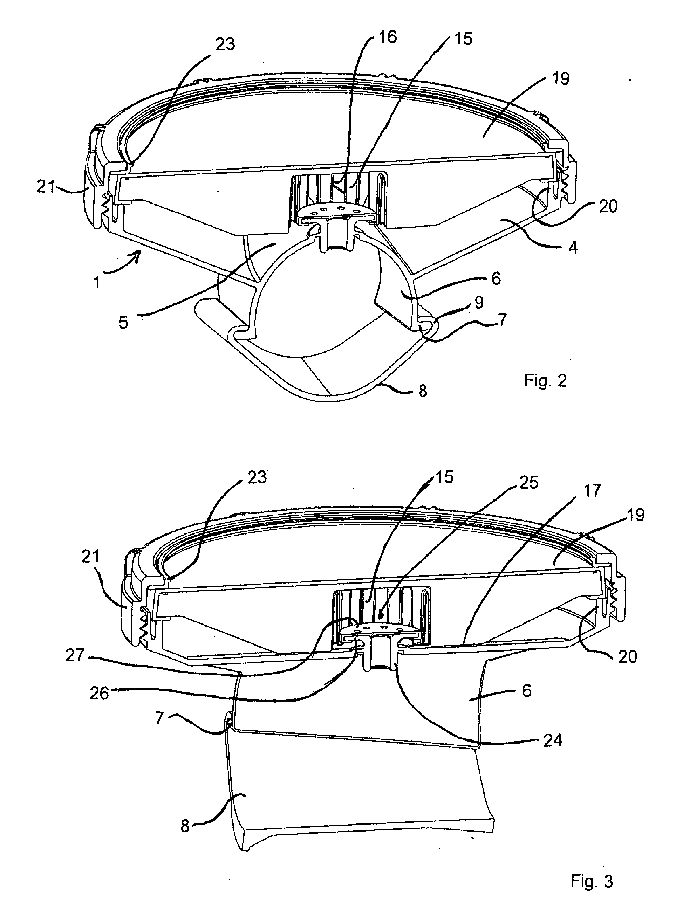

Wie insbesondere aus Fig. 2 ersichtlich ist, weist das Anschlussstück 6 zwei sich nach außen erstreckende Stege 7 auf, welche bezüglich einer Achse des Anschlussstücks 6 schräg verlaufen. Ein mit dem Bezugszeichen 8 bezeichnetes Gegenstück ist nach Art eines sich aufweitenden Halbzylinders ausgebildet und weist an seinen beiden Kanten eine nutartige Ausnehmung 9 auf. Die nutartige Ausnehmung 9 ist korrespondierend zu den Stegen 7 ausgebildet, so dass das Gegenstück 8 durch Aufschieben mit dem Anschlussstück 6 verbindbar ist.

Ein, vorteilhafterweise aus spritzgegossenem Kunststoff hergestelltes, oberes Gehäuseelement 10 ist nach Art einer Scheibe ausgeführt und weist eine zylindrische zweite Umfangswand 11 auf. Ein Außendurchmesser der zweiten Umfangswand 11 ist kleiner als ein Innendurchmesser der ersten Umfangswand 2, so dass das obere Gehäuseelement 10 in das untere Gehäuseelement 1 einsetzbar ist. Eine Oberseite O des oberen Gehäuseelements 10 ist im Wesentlichen eben ausgebildet. Angrenzend an die zweite Umfangswand 11 weist eine die Oberseite O bildende Trägerscheibe 12 schlitzartige Gasdurchlassöffnungen 13 auf.

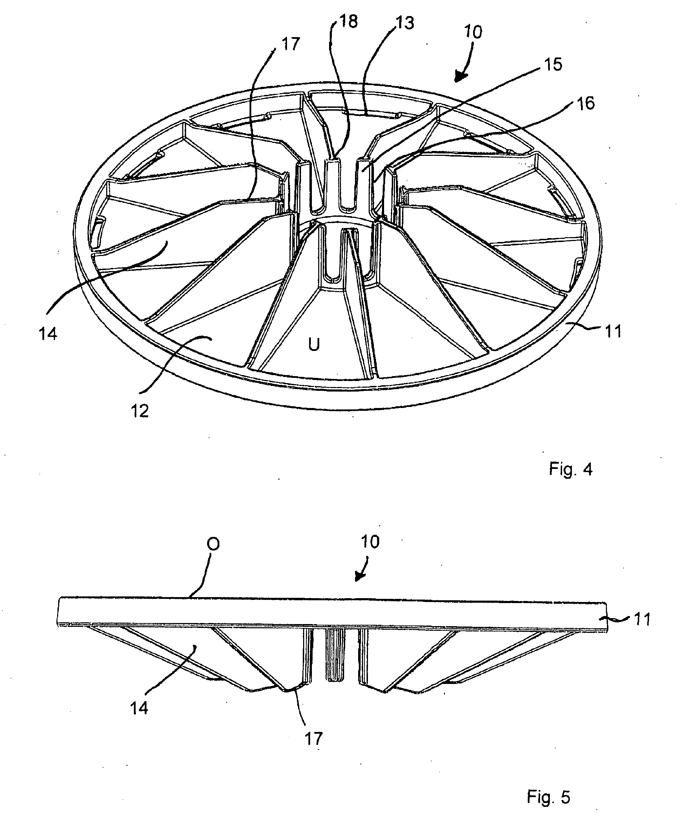

Wie insbesondere aus den Fig. 4 und 5 ersichtlich ist, erstrecken sich an einer Unterseite U der Trägerscheibe 12 von der zweiten Umfangswand 11 in radialer Richtung Versteifungsstege bzw. Rippen 14. Eine Höhe der an der Trägerscheibe 12 angeformten Rippen 14 nimmt von einem durch die zweite Umfangswand 11 gebildeten Umfangsrand des oberen Gehäuseelements 10 zu dessen Zentrum hin abschnittsweise zu. Das Zentrum der Unterseite U ist von einer zylindrischen Stützstruktur 15 umgeben, welche sich von der Trägerscheibe 12 erstreckt. Die Rippen 14 grenzen an die zylindrische Stützstruktur 15. Die zylindrische Stützstruktur 15 weist eine Vielzahl axialer Schlitze 16 auf, welche sich zwischen den Rippen 14 bis in die Nähe der Trägerscheibe 12 erstrecken.

Zumindest ein Teil der Rippen 14 weist in der Nähe der zylindrischen Stützstruktur 15 jeweils eine Stützkante 17 auf. Eine Höhe und eine Neigung der Stützkante 17 ist so angepasst, dass sich zumindest ein Teil der Rippen 14 im Montagezustand auf den gewölbten Bodenabschnitt 5 abstützt. In ähnlicher Weise sind auch in Form von Kreisbogenabschnitten ausgebildete Oberkanten 18 der zylindrischen Stützstruktur 15 so geformt, dass sie sich im Montagezustand formschlüssig auf den gewölbten Bodenabschnitt 5 abstützen.

Obwohl es in den Figuren nicht gezeigt ist, kann es auch sein, dass die Stützkanten 17 der Rippen 14 so ausgestaltet sind, dass sie in zwei, beispielsweise um 90° verschiedenen, Einbaupositionen jeweils auf dem gewölbten Bodenabschnitt 5 abstützbar sind.

Mit dem Bezugszeichen 19 ist eine beispielsweise aus Silikonkautschuk hergestellte Begasungsmembran bezeichnet, welche korrespondierend zur Oberseite O und der zweiten Umfangswand 11 ausgestaltet ist. Ein umlaufender Randabschnitt der Begasungsmembran 19 umgreift im Montagezustand die zweite Umfangswand 11, so dass das in das untere Gehäuseelement 1 eingesetzte obere Gehäuseelement 10 über den Randabschnitt der Begasungsmembran 19 auf einem am unteren Gehäuseelement 1 angeformten Auflagesteg 20 abgestützt wird. Damit wird ein gasdichter Abschluss eines durch das obere 10 und das untere Gehäuseelement 1 gebildeten Gehäuses erreicht.

Zur Befestigung des oberen Gehäuseelements 10 samt daran angebrachter Begasungsmembran 19 ist ein Gewindering 21 vorgesehen, dessen Innenwand ein zum Außengewinde 3 korrespondierendes Innengewinde 22 aufweist. Ein Zwischenring 23 trägt eine durch den Gewindering 21 ausgeübte Klemmkraft auf die Begasungsmembran 19 gleichmäßig ab und bildet gleichzeitig eine Gleitfläche beim Anziehen des Gewinderings 21.

Der gewölbte Bodenabschnitt 5 des unteren Gehäuseelements 1 wird von einem Gaseinlassstutzen 24 durchgriffen, an dessen dem Gehäuseinneren zugewandten einen Ende ein Einweg-Membranventil 25 mit einem Membranteller 26 und einer daran angebrachten durchbrochenen Ventilmembran 27 vorgesehen ist.

Die Funktion der Vorrichtung ist Folgende:
Zur Montage auf einer mit einer Gaszuführöffnung versehenen Gaszuführleitung (in den Figuren nicht gezeigt) wird die vormontierte Vorrichtung mit dem Anschlussstück 6 so auf die Gaszuführleitung aufgesetzt, dass der Gaseinlassstutzen 24 die Gaszuführöffnung (hier nicht gezeigt) durchgreift. Anschließend wird das Gegenstück 8 auf das Anschlussstück 6 aufgesteckt und damit die Vorrichtung klemmend an der Gaszuführleitung befestigt.

Die durch die Gaszuführleitung unter Druck zugeführte Luft gelangt durch den Gaseinlassstutzen 24 und das Einweg-Membranventil 25 in die zylindrische Stützstruktur 15 und von da aus durch die axialen Schlitze 16 in einen zwischen den Rippen 14 gebildeten Gaszuführraum. Von da aus wird die zugeführte Luft durch die Gasdurchlassöffnungen 13 gegen die perforierte Begasungsmembran 19 gedrückt. Sie durchdringt die in der Begasungsmembran 19 vorgesehenen Perforationen und tritt in feinblasiger Form in eine die Vorrichtung umgebende Flüssigkeit ein.

Indem die Luft durch die in der Trägerplatte 12 radial außenliegenden Gasdurchlassöffnungen 13 gegen die Begasungsmembran 19 gedrückt wird, bläht sich die Begasungsmembran 19 vom Umfangsrand her vollflächig auf. Es wird die gesamte Fläche der Begasungsmembran 19 zur Erzeugung von Gasblasen genutzt.

Ein bei unterbrochener Gaszufuhr auf das obere Gehäuseelement 10 wirkender Flüssigkeitsdruck wird über die zylindrische Stützstruktur 15 und die Rippen 14 mit den daran vorgesehenen Stützkanten 17 insbesondere gegen den gewölbten Abschnitt 5 des Bodens des unteren Gehäuseelements 1 abgetragen.

### Bezugszeichenliste

- 1: unteres Gehäuseelement
- 2: erste Umfangswand
- 3: Außengewinde
- 4: trichterförmiger Bodenabschnitt
- 5: gewölbter Bodenabschnitt
- 6: Anschlussstück
- 7: Steg
- 8: Gegenstück
- 9: nutartige Ausnehmung
- 10: oberes Gehäuseelement
- 11: zweite Umfangswand
- 12: Trägerscheibe
- 13: Gasdurchlassöffnung
- 14: Rippe
- 15: zylindrische Stützstruktur
- 16: axialer Schlitz
- 17: Stützkante
- 18: Oberkante
- 19: Begasungsmembran
- 20: Auflagesteg
- 21: Gewindering
- 22: Innengewinde
- 23: Zwischenring
- 24: Gaseinlassstutzen
- 25: Einweg-Membranventil
- 26: Membranteller
- 27: Ventilmembran

- O: Oberseite
- U: Unterseite

## Patentansprüche

1. Vorrichtung zum Begasen von Flüssigkeiten, insbesondere zum Belüften von Abwasser und dgl.,
mit einem eine im Wesentlichen runde Öffnungsfläche aufweisenden unteren Gehäuseelement (1) mit einem Gaseinlassstutzen (24),
einem zur Öffnungsfläche korrespondierenden scheibenförmigen oberen Gehäuseelement (10) zum Abdecken der Öffnungsfläche, wobei das obere Gehäuseelement (10) eine scheibenförmige Trägerplatte (12) mit einer dem unteren Gehäuseelement (1) abgewandten im Wesentlichen eben ausgebildeten Oberseite (O) aufweist und wobei in der Nähe eines Umfangsrands des oberen Gehäuseelements (10) mehrere die Trägerplatte (12) durchgreifende Gasdurchlassöffnungen (13) vorgesehen sind, und
einer die Oberseite (O) des oberen Gehäuseelements (10) überdeckenden perforierten Begasungsmembran (19), so dass Gas durch die in der Trägerplatte (12) radial außenliegenden Gasdurchlassöffnungen (13) gegen die Begasungsmembran (19) gedrückt wird, wodurch sich die Begasungsmembran (19) vom Umfangsrand her vollflächig aufbläht.

2. Vorrichtung nach Anspruch 1, wobei das untere Gehäuseelement (1) einen zumindest abschnittsweise trichterartig ausgestalteten Boden (4) aufweist, an dem ein nach Art einer Hohlkehle ausgebildetes Anschlussstück (6) zum formschlüssigen Ansetzen des unteren Gehäuseelements (1) an eine Gaszuführleitung angeformt ist.

3. Vorrichtung nach Anspruch 2, wobei der Boden (4) einen gewölbten Abschnitt (5) mit einer zur Hohlkehle korrespondierenden und in Richtung der Öffnungsfläche vorspringenden Wölbung aufweist.

4. Vorrichtung nach einem der Ansprüche 2 oder 3, wobei der Gaseinlassstutzen (24) den Boden zentral durchgreift.

5. Vorrichtung nach einem der Ansprüche 2 bis 4, wobei der Gaseinlassstutzen (24) das Anschlussstück (6) durchgreift.

6. Vorrichtung nach einem der vorhergehenden Ansprüche, wobei eine einem Gehäuseinneren des unteren Gehäuseelements (1) zugewandte Öffnung des Gaseinlassstutzens (24) mit einem Einwegventil, vorzugsweise einem Einweg-Membranventil (25), versehen ist.

7. Vorrichtung nach einem der vorhergehenden Ansprüche, wobei sich von einer der Oberseite (O) gegenüberliegenden Unterseite (U) des oberen Gehäuseelements (10) eine zylindrische Stützstruktur (15) erstreckt.

8. Vorrichtung nach Anspruch 3 und 7, wobei sich die zylindrische Stützstruktur (15) bei auf dem unteren Gehäuseelement (1) angebrachten oberen Gehäuseelement (10) auf dem gewölbten Abschnitt (5) des Bodens abstützt.

9. Vorrichtung nach einem der Ansprüche 7 oder 8, wobei sich von der zylindrischen Stützstruktur (15) radial in Richtung des Umfangsrands (11) Rippen (14) erstrecken.

10. Vorrichtung nach Anspruch 9, wobei zwischen zwei benachbarten Rippen (14) jeweils eine Gasdurchlassöffnung (13) vorgesehen ist.

11. Vorrichtung nach Anspruch 3 und einem der Ansprüche 9 oder 10, wobei die Rippen (14) so ausgestaltet sind, dass sie sich bei auf dem unteren Gehäuseelement (1) angebrachten oberen Gehäuseelement (10) abschnittsweise formschlüssig auf dem gewölbten Abschnitt (5) abstützen.

12. Vorrichtung nach Anspruch 3 und einem der Ansprüche 9 bis 11, wobei die Rippen (14) so ausgestaltet sind, dass sie sich bei auf dem unteren Gehäuseelement (1) angebrachten oberen Gehäuseelement (10) in zwei zueinander senkrechten Richtungen auf dem gewölbten Abschnitt (5) formschlüssig abstützbar sind.

13. Vorrichtung nach einem der vorhergehenden Ansprüche, wobei ein das obere Gehäuseelement (10) randlich übergreifender Gewindering (21) zum Befestigen des oberen Gehäuseelements (10) am unteren Gehäuseelement (1) vorgesehen ist.

## Claims

1. A device for gassing liquids, in particular for aerating sewage and the like,
comprising a lower housing element (1) which has a substantially round opening area and a gas inlet port (24),
a disk-shaped upper housing element (10), which corresponds to the opening area, for covering the opening area, wherein the upper housing element (10) has a disk-shaped carrier plate (12) with an upper side (O) which faces away from the lower housing element (1) and which is formed to be substantially flat, and wherein a plurality of gas through-openings (13) is provided in the vicinity of a peripheral edge of the upper housing element (10), said gas through-openings (13) passing through the carrier plate (12), and
a perforated gassing membrane (19) covering the upper side (O) of the upper housing element (10) so that gas is pressed through the gas through-openings (13) arranged radially outward in the carrier plate (12) and is pressed against the gassing membrane (19), whereby the gassing membrane (19) inflates starting from the peripheral edge over the full area.

2. The device according to claim 1, wherein the lower housing element (1) has a bottom (4) which, at least in sections, is configured in a funnel-like manner, and on which a connecting piece (6) shaped in the manner of a fillet is molded for positively attaching the lower housing element (1) to a gas supply line.

3. The device according to claim 2, wherein the bottom (4) has curved section (5) with a curvature that corresponds to the fillet and protrudes toward the opening area.

4. The device according to claim 2 or 3, wherein the gas inlet port (24) passes centrally through the bottom.

5. The device according to any one of the claims 2 to 4, wherein the gas inlet port (24) passes through the connecting piece (6).

6. The device according to any one of the preceding claims, wherein an opening of the gas inlet port (24), which opening faces the housing interior of the lower housing element (1), is provided with a one-way valve, preferably a one-way membrane valve (25).

7. The device according to any one of the preceding claims, wherein a cylindrical support structure (15) extends from a lower side (U) of the upper housing element (10) which lower side (U) opposes the upper side (O).

8. The device according to claims 3 and 7, wherein the cylindrical support structure (15) is supported on the curved section (5) of the bottom when the upper housing element (10) is attached on the lower housing element (1).

9. The device according to claims 7 or 8, wherein ribs (14) extend radially from the cylindrical support structure (15) toward the peripheral edge (11).

10. The device according to claim 9, wherein between two adjacent ribs (14), in each case one gas through-opening (13) is provided.

11. The device according to claim 3 and to any one of the claims 9 or 10, wherein the ribs (14) are configured such that they are positively supported in sections on the curved section (5) when the upper housing element (10) is attached on the lower housing element (1).

12. The device according to claim 3 and to any one of the claims 9 to 11, wherein the ribs (14) are configured in such a manner that when the upper housing element (10) is attached on the lower housing element (1), they can be positively supported on the curved section (5) in two directions which are perpendicular to each other.

13. The device according to any one of the preceding claims, wherein a threaded ring (21) engaging over the edge of the upper housing element (10) is provided for fastening the upper housing element (10) to the lower housing element (1).

## Revendications

1. Dispositif de gazage de liquides, en particulier d'aération d'eaux usées et analogues,
comprenant un élément de boîtier inférieur (1) présentant une face d'ouverture essentiellement circulaire, doté d'une tubulure d'entrée de gaz (24),
un élément de boîtier supérieur (10), en forme de disque correspondant à la face d'ouverture, servant au recouvrement de la face d'ouverture, l'élément de boîtier supérieur (10) présentant une plaque de support (12) en forme de disque avec un côté supérieur (O) essentiellement de forme plane opposé à l'élément de boîtier inférieur (1) et dans lequel plusieurs orifices de passage de gaz (13) traversant la plaque de support (12) sont prévus à proximité d'un bord périphérique de l'élément de boîtier supérieur (10), et
une membrane de gazage (19) perforée, recouvrant le côté supérieur (O) de l'élément de boîtier supérieur (10) de façon à ce que du gaz agisse sur la membrane de gazage (19) à travers les orifices de passage de gaz (13) radialement extérieurs dans la plaque de support (12) ce qui entraîne, à partir du bord périphérique, la dilatation sur toute la surface de la membrane de gazage (19).

2. Dispositif selon la revendication 1, dans lequel l'élément de boîtier inférieur (1) présente un fond (4) en forme d'entonnoir, tout au moins par section, sur lequel une pièce de raccordement (6) réalisée sous forme de goulotte est formée pour appliquer solidairement l'élément de boîtier inférieur (1) sur une conduite d'alimentation de gaz.

3. Dispositif selon la revendication 2, dans lequel le fond (4) présente une partie bombée (5) avec une courbure correspondant à la goulotte et saillante dans le sens de la face d'ouverture.

4. Dispositif selon l'une des revendications 2 ou 3, dans lequel la tubulure d'entrée de gaz (24) traverse au centre le fond.

5. Dispositif selon l'une des revendications 2 à 4, dans lequel la tubulure d'entrée de gaz (24) traverse la pièce de raccordement (6).

6. Dispositif selon l'une des revendications précédentes, dans lequel un orifice de la tubulure d'entrée de gaz (24) face à un intérieur de boîtier de l'élément de boîtier inférieur (1) est doté d'une vanne monovoie, de préférence d'une vanne à membrane monovoie (25).

7. Dispositif selon l'une des revendications précédentes, dans lequel une structure de support cylindrique (15) s'étend à partir d'un côté intérieur (U), opposé au côté supérieur (O), de l'élément de boîtier supérieur (10).

8. Dispositif selon la revendication 3 et 7, dans lequel la structure de support cylindrique (15) s'appuie sur la partie bombée (5) du fond sur l'élément de boîtier supérieur (10) qui est monté sur l'élément de boîtier inférieur (1).

9. Dispositif selon l'une des revendications 7 ou 8, dans lequel des ailettes (14) s'étendent à partir de la structure de support cylindrique (15) radialement dans le sens du bord périphérique (11).

10. Dispositif selon la revendication 9, dans lequel respectivement un orifice de passage de gaz (13) est prévu entre deux ailettes (14) adjacentes.

11. Dispositif selon la revendication 3 et l'une des revendications 9 ou 10, dans lequel les ailettes (14) sont réalisées de façon à ce qu'elles s'appuient par section solidairement sur la partie bombée (5) sur l'élément de boîtier supérieur (10) qui est monté sur l'élément de boîtier inférieur (1).

12. Dispositif selon la revendication 3 et l'une des revendications 9 à 11, dans lequel les ailettes (14) sont réalisées de façon à ce qu'elles puissent s'appuyer solidairement dans deux sens verticaux l'un par rapport à l'autre sur la partie bombée (5) sur l'élément de boîtier supérieur (10) qui est monté sur l'élément de boîtier inférieur (1).

13. Dispositif selon l'une des revendications précédentes, dans lequel une bague filetée (21) chevauchant par le bord l'élément de boîtier supérieur (10) est prévue pour fixer l'élément de boîtier supérieur (10) à l'élément de boîtier inférieur (1).
